# EUROPÄISCHE PATENTSCHRIFT

(11) **EP 1 594 679 B1**
(45) Veröffentlichungstag und Bekanntmachung des Hinweises auf die Patenterteilung: **14.04.2010**
(21) Anmeldenummer: 04710775.0
(22) Anmeldetag: 13.02.2004
(51) Int. Cl.: B29C 67/24, B29C 67/00, B29C 41/00, B29K 105/04

(54) **BESCHICHTETE PULVERPARTIKEL FÜR DIE HERSTELLUNG VON DREIDIMENSIONALEN KÖRPERN MITTELS SCHICHTAUFBAUENDER VERFAHREN**
POWDER PARTICLES FOR PRODUCING THREE-DIMENSIONAL BODIES BY A LAYER CONSTITUTING METHOD
PARTICULES DE POUDRE REVETUES DESTINEES A LA PRODUCTION DE CORPS TRIDIMENSIONNELS AU MOYEN DE PROCEDES DE CONSTITUTION DE COUCHES

(30) Priorität: 18.02.2003 DE 10306888
(43) Veröffentlichungstag der Anmeldung: 16.11.2005
(73) Patentinhaber: Daimler AG, 70327 Stuttgart (DE)
(72) Erfinder: PFEIFER, Rolf, DE-73054 Eislingen (DE); SHEN, Jialin, 89182 Bernstadt (DE)
(74) Vertreter: JENSEN & SON
(86) Internationale Anmeldenummer: PCT/DE2004/000259
(87) Internationale Veröffentlichungsnummer: WO 2004/073961

(56) Entgegenhaltungen:
- EP-A- 0 076 781
- EP-A- 0 369 330
- EP-A- 0 897 745
- WO-A-01/78969
- DE-A- 4 315 382
- US-A- 5 902 441
- NELSON J C ET AL: "SELECTIVE LASER SINTERING OF POLYMER-COATED SILICON CARBIDE POWDERS" INDUSTRIAL & ENGINEERING CHEMISTRY RESEARCH, AMERICAN CHEMICAL SOCIETY. WASHINGTON, US, Bd. 34, Nr. 5, Mai 1995 (1995-05), Seiten 1641-1651, XP001108931 ISSN: 0888-5885

## Beschreibung

Die Erfindung betrifft beschichtetes Pulvermaterial für die Herstellung von dreidimensionalen Körpern (3D-Körpern) mittels schichtaufbauender Verfahren (pulverbasierte-generative rapid prototyping Verfahren) gemäß dem Anspruch 1, insbesondere mittels 3D-Binderdruck, die Herstellung von 3D-Körpern hieraus, sowie die Herstellung und Verwendung hieraus erhältlicher Sinterkörper gemäß den Ansprüchen 13, 16, 18 und 19. Derartige Materialien sowie Verfahren sind bekannt aus DE 44 40 397 C2, DE 698 07 236 T2, DE 696 07 975 T2, DE 690 31 808 T2 und US 6,335,097 B1 sowie WO 01/78969, das ein beschichtetes Pulvermaterial gemäß dem Oberbegriff des Anspruchs 1 offenbart, und [J.C. Nelson et al. " Selective Laser Sintering of Polymer Coated Silicon Carbide Powders" Inustrial & Engineering Chemistry Research, American Chemical Society, Washington, US, 1995, BD 34 No 5 p. 1641 - 1651].

Zu den neueren und besonders interessanten pulverbasierten generativen rapid prototyping Verfahren gehört das 3D-Binderdruckverfahren.

In einer ersten Variante des 3D-Binderdrucks, wird eine Schicht aus Partikeln oder Granulaten auf eine Unterlage ausgebracht und hierauf in vorgegebenen Bereichen, die jeweils einer Schicht eines zu erzeugenden Gegenstandes entsprechen, mit einer Bindeflüssigkeit befeuchtet. Die Partikel werden in den befeuchteten Bereichen von der Binderflüssigkeit benetzt und verklebt. Durch anschließendes Verdampfen der Lösungsmittel in der Binderflüssigkeit haften die Partikel unmittelbar aneinander, wobei sie zumindest in ihren-Randbereiehen miteinander verschmelzen. 3D-Binderdruckverfahren, die sich insbesondere auf diesen Typ beziehen, sind beispielsweise aus den europäischen Patenten EP 0644 809 B1 , EP 0686 067 B1 und der europäischen Patentanmeldung EP 1 099 534 A2 bekannt.

In einer weiteren Variante dieses Verfahrens wird eine Sinterhilfsstoffe enthaltende Binderflüssigkeit eingesetzt, die beim Trocknen der befeuchteten Bereiche Sinterhilfsstoffe zurücklässt, die eine festes Versintern der Partikel in einer folgenden Sinterbehandlung ermöglichen. Hierdurch sind harte und dichte Sinterkörper erhältlich.

Aus der EP 0 925 169 B1 ist eine weitere Variante des 3D-Binderdruckverfahrens bekannt, in der Mischungen aus Partikeln, Füllern und Klebern eingesetzt werden. Die Binderflüssigkeit wird im Wesentlichen nur noch aus einem Lösungsmittel für den in der Mischung enthaltenen Kleber gebildet. Der Kleber kann dabei als Beschichtung der Partikel vorliegen.

Ein weiteres Verfahren des generativen rapid prototyping (RP) sieht die Verfestigung der Partikel in der Schicht mittels Licht oder laserinduziertem Sintern vor (im folgenden Lasersintern). Hierzu wird die Schicht in definierten Bereichen mittels Belichtung, gegebenenfalls auch durch eine Maske, oder Laserstrahlung so weit erhitzt, dass die Partikel zusammenschmelzen oder zusammensintern können.

Die bekannten generativen RP-Verfahren haben bei der Herstellung von Sinterkörpern den Nachteil, dass der fertige Grün- oder Sinterkörper gegenüber dem ursprünglich mittels Binderflüssigkeit, Licht oder Laserlicht aktivierten Bereich eine deutliche Schrumpfung aufweist. Dies ist auf Effekte während der Aktivierung und während des Sinterns zurückzuführen, wobei unter Sintern sowohl die laserinduzierten Vorgänge beim Härten der Schicht als auch die Herstellung von Sinterkörpern aus den durch die RP-Verfahren erhältlichen Grünkörper zu verstehen ist.

Beim Binderdruck rücken die Partikel beim Befeuchten unter Einwirkung der Kapillarkräfte und der Oberflächenspannung näher zusammen, insbesondere dann, wenn vorhandene Kleber durch die Binderflüssigkeit gequollen oder aufgelöst werden, so dass bereits nach während der Formgebung beziehungsweise nach der Trocknung zum Grünkörper eine deutliche Schwindung stattgefunden hat. Auch beim Belichten oder Lasersintern der Partikel treten Schwindungsprozesse auf.

Der Effekt des Sinterns, insbesondere im Hinblick auf die Herstellung von Sinterkörpern, lässt sich in mehrere Stadien aufteilen. Im Anfangs- oder Frühstadium sind die ursprünglichen Teilchen noch sichtbar. Der erste Zusammenhalt zwischen den Pulverteilchen entsteht durch Brückenbildung und Kornwachstum. Es erfolgt eine geringe Schwindung. Im mittleren Stadium erfolgt die Ausbildung eines zusammenhängenden Porenraums. Die Erkennbarkeit der einzelnen Teilchen geht verloren und gleichzeitig beginnt die Sinterschwindung. Im Spätstadium erfolgt die Verringerung des Porenraums, der in zunehmendem Maße von außen zugänglich wird (geschlossene Poren). Im Grenzfall erfolgt eine vollständige Verdichtung (Dichtsinterung).

Die wesentlichen Anteile der Schwindung sind auf das mittlere Stadium zurückzuführen.

Die bekannten Beschichtungen haben den Nachteil, dass sie hydrophil sind und daher Wasser aus der Umgebung aufnehmen. Dies führt zum Einen zu einer Agglomeration der Partikel und zum Anderen zu einer hohen Bindeflüssigkeitsaufnahme bei 3D-Binderdruckverfahren. Dies hat einen negativen Einfluss auf die Abbildungsschärfe des 3D-Binderdruckverfahrens, die Materialschwindung unter Einwirkung der Binderflüssigkeit, die Lagerfähigkeit, sowie das Handling des Pulvers.

Aufgabe der Erfindung ist es daher, beschichtete Partikel für pulverbasierte generative rapid prototyping Verfahren, insbesondere den 3D-Binderdruck anzugeben, die eine verbesserte Lagerfähigkeit, ein verbessertes Handling aufzeigen und eine höhere Abbildeschärfe zulassen, sowie Verfahren zur schwindungsarmen Herstellung von Körpern oder Sinterkörpern aus diesen Partikeln bereitzustellen.

Die Aufgabe wird gelöst durch beschichtetes Pulvermaterial gemäß dem Anspruch 1, sowie Verfahren zum Aufbau von Körpern aus dem beschichteten Pulvermaterial gemäß den Ansprüchen 13 und 16. Eine Vorteilhafte Verwendung der Sinterkörper liegt in der Gießereitechnik, dem Formenbau und der Herstellung von Gussformen.

Bevorzugte Ausführungsformen sind Gegenstand der abhängigen Ansprüche.

Ein erster Aspekt der Erfindung betrifft die erfindungemäße Beschichtung des Pulvermaterials.

Eine erste Ausführungsform der Erfindung bezieht sich auf ein 3D-Binderdruckverfahren und hierfür besonders geeignete Partikel. Das Klebemittel besteht erfindungsgemäß aus einem Kleber, der durch eine geeignete Binderflüssigkeit zumindest zum Teil angelöst oder zur Quellung gebracht wird, so dass benachbarte Partikel des Pulvermaterials miteinander verkleben können Die Dicke der den Kleber enthaltenden Oberflächenschicht liegt dabei bevorzugt im Bereich von 0,1 bis 10% des mittleren Durchmessers des Pulvermaterials. Die bevorzugte Menge an Kleber liegt im Bereich von 0,3 bis 8 Gew% des jeweils beschichteten Pulvermaterials.

Unter dem Begriff Pulvermaterial sind dabei sowohl die einzelnen Partikel oder Primärpartikel aus Kunststoff, Metall oder Keramik als auch Aggregate oder Granulate, die insbesondere Bindephasen enthalten können, zu verstehen.

In einer bevorzugten Ausgestaltung der Erfindung wird das Pulvermaterial durch Granulate gebildet, deren Bindephase zum überwiegenden Teil aus dem Kleber besteht.

Zu den erfindungsgemäß geeigneten Klebern zählen insbesondere organische- oder metallorganische polymere Verbindungen mit geringer Hydrophilie. Bevorzugt handelt es sich um polare Gruppen enthaltende Polymere mit geringer Wasserlöslichkeit, die in organischen Lösungsmitteln, wie beispielsweise Alkoholen, Ketonen oder Polyethern löslich sind. Insbesondere hinsichtlich der Einstellung der gewünschten Löslichkeiten, kann die Verwendung von Polymerblends von Vorteil sein. Zu den erfindungsgemäß geeigneten Polymeren gehören unter anderem Poly(meth)acrylate, Polyvinylalkohole, Polyvinylacetate, oder Polyvinylpyrrolidone. In einer besonders bevorzugten Ausführung der Erfindung wird als Kleber ein Polyvinylbutyral oder Mischungen hieraus verwendet.
Unter den metallorganischen Polymeren sind insbesondere Polysilane, Polycarbosilane oder Polysilazane von Bedeutung.

In einer weiteren Ausgestaltung der Erfindung sind die Kleber aus im Wesentlichen unpolaren Polymeren, beispielsweise Wachse aufgebaut. Diese Kleber sind insbesondere für metallisches Pulvermaterial geeignet.

Durch die erfindungsgemäß bevorzugten Kleber wird auf der Oberfläche des Pulvermaterials eine wasserunlösliche bis hydrophobe Schicht gebildet, die nicht mehr zur Aufnahme von Wasser aus der Umgebung, insbesondere der Luftfeuchtigkeit neigt. Dies hat den Vorteil, dass die beschichteten Partikel eine hohe Lagerfähigkeit und ein ausgezeichnetes Handling aufweisen. Ein weiterer Vorteil liegt in der Verbesserung der Abbildeschärfe (Genauigkeit, Oberflächenqualität) des Binderdrucks. Da die einzelnen beschichteten Partikel nicht mehr unter dem Einfluss von Luftfeuchtigkeit zur Verklebung neigen, werden keine sekundären Agglomerate gebildet. Die minimale Dicke einer im 3D-Binderdruckverfahren ausgebrachten Materialschicht liegt daher beim Durchmesser der Partikel des Pulvermaterials und nicht beim Durchmesser gegebenenfalls hieraus gebildeter sekundärer Agglomerate.

Eine weitere Ausgestaltung der Erfindung bezieht sich auf das Laserinduzierte Sintern als Verfahren des generativen RP sowie besonders geeignete Beschichtungen.

Im Unterschied zu dem ausgeführten 3D-Binderdruck findet die Aktivierung des Klebemittels hierbei durch Laserbestrahlung statt. Erfindungsgemäß ist als Klebemittel eine polymere Beschichtung vorgesehen, die durch die eingebrachte thermische Energie des Lasers sintert oder zumindest teilweise aufschmilzt. Als Klebemittel sind dabei insbesondere Polymere mit einem Schmelzpunkt unterhalb 150°C geeignet. Wird als Pulvermaterial Kunststoff verwendet, so sollte die Schmelz- oder Sintertemperatur des Klebemittels mindestens 20°C unterhalb denen der Kunststoffpartikel liegen.

Eine weitere Ausgestaltung der Erfindung bezieht sich auf ein lichtinduziertes Verfahren des generativen RP, sowie besonders geeignete Beschichtungen.

Die Aktivierung des Klebemittels erfolgt hierbei durch Bestrahlung mit Licht. Als Klebemittel sind dabei lichtinduziert härtende Binder, wie beispielsweise UV-Lacke auf der Basis von (Meth)acrylaten, vorgesehen. Gegebenenfalls ist die Befeuchtung der zu aktivierenden Bereiche mittels einer Binderlösung von Vorteil.

Ein weiterer Aspekt der Erfindung betrifft das in der Beschichtung enthaltene Feinkornmaterial aus sinterfähigen und/oder glasbildenden Mikropartikeln.

Dieser Aspekt wird anhand von schematischen Zeichnungen näher erläutert. Dabei zeigen:

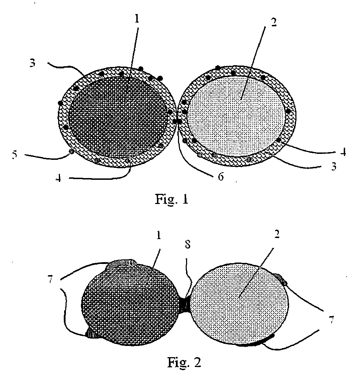

**Fig.1** zwei unterschiedliche Partikel mit einer Beschichtung aus Klebemittel und Feinkornmaterial,
**Fig. 2** zwei unterschiedliche Partikel, die durch eine Sinterbrücke aus Feinkornmaterial verbunden sind.

Im Sinne der Erfindung ist zwischen dem Pulvermaterial aus einzelnen Partikeln eines Pulvers (2) oder auch durch Agglomeration gebildete Aggregate (1), insbesondere Granulate, die durch nichtpulvrige Bindephasen durchsetzt sein können und dem Feinkornmaterial (4, 5, 6) zu unterscheiden. Das Feinkornmaterial besteht aus einzelnen Partikeln, deren Abmessungen deutlich unterhalb den Abmessungen des Pulvermaterials liegt. Die mittleren Partikelgrößen des Feinkornmaterials liegen typischerweise unterhalb 30 % der Partikelgröße des Pulvermaterials und bevorzugt im Bereich von 0,3 bis 5 %. Besonders bevorzugt besteht das Feinkornmaterial aus Submikron- oder Nanopartikeln. Das Feinkornmaterial (4) liegt dabei zumindest zum Teil innerhalb der durch das Klebemittel (3) gebildeten Beschichtung. Auch aus der Beschichtung herausragende Partikel (5) sind bevorzugt von Klebemittel bedeckt.

Das Feinkornmaterial ist aus sinterfähigem und/oder glasbildendem Material aufgebaut, das geeignet ist, bei einer späteren Temperaturbehandlung des durch das 3D-Binderdruck verfahren gebildeten Körpers (oder Grünkörper) eine feste Sinter- oder Glasphase auszubilden.

Die erfindungsgemäße Anordnung der Feinkornpartikel auf der Oberfläche der einzelnen Pulverpartikel führt dazu, dass bei dieser Temperaturbehandlung Sinter- oder Glasbrücken (8) zwischen benachbarten Pulverpartikeln (1, 2) ausgebildet werden. Dadurch findet eine Verfestigung des Grünkörpers beziehungsweise die Ausbildung eines festen Sinterkörpers statt. Die hierbei stattfindende Schwindung ist minimal, da sie auf die kleinen Feinkornpartikel begrenzt ist (7). Die an den Kontaktflächen liegenden Feinkornpartikel (6) bewirken, dass auch die Entbinderung der Körper zu keiner nennenswerten Schwindung führen kann, wie sie durch die Entfernung des Klebers zu erwarten wäre.

Wird diese Temperaturbehandlung unterhalb der Glasbildungs- oder Sintertemperatur des Pulvermaterials ausgeführt, so tritt nahezu keine Sinterschwindung des gesamten Körpers oder Grünkörpers auf.

Bevorzugt werden daher Pulvermaterial und Feinstkornmaterial so ausgewählt, dass die Feinkornpärtikel eine geringere Sinter- oder Glasbildungstemperatur aufweisen als das Pulvermaterial. Bevorzugt liegt dieser Temperaturunterschied oberhalb 30°C und besonders bevorzugt oberhalb 100°C.

Grundsätzlich gilt bei artgleichem Material, dass die kleineren Partikel aufgrund ihrer höheren Oberflächenenergie eine geringere Sintertemperatur bzw. Glasbildungstemperatur aufweisen als die größeren. Dieser Effekt ist insbesondere bei den bevorzugten Feinkornpartikeln im Submikrometer- oder Nanobereich sehr deutlich. Daher umfassen die erfindungsgemäß bevorzugten Materialkombinationen sowohl unterschiedliche wie gleiche chemische Verbindungen.

Bei dem Feinkornmaterial kann es sich ebenso wie bei dem Pulvermaterial um Kunststoff, Metalle oder Keramik handeln. Dabei sind chemisch kompatible Materialien bevorzugt, da das Feinkornmaterial hierdurch besonders fest anhaftende Sinter- oder Glasbrücken ausbilden kann. Üblicherweise umfasst das Material der Feinkornpartikel die für das jeweilige Pulvermaterial üblichen Sinterhilfsmittel.

Im Falle von keramischem Pulvermaterial wird das Feinkornmaterial bevorzugt aus der Gruppe der Oxide, Nitride, oder Carbide der Elemente B, Si, Ti, Al und/oder Zr ausgewählt. Besonders bevorzugt sind SiO₂, Silikate, Borsilikate oder Alumosilikate, insbesondere in Verbindung mit Pulvermaterial aus Oxidkeramik.

In einer besonders bevorzugten Ausgestaltung der Erfindung wird das Pulvermaterial im Wesentlichen aus ZrSiO₄, ZrO₂, und/oder Al₂O₃ und das Feinkornmaterial aus SiO₂, insbesondere SiO₂-Nanopulver, gebildet.

In einer weiteren bevorzugten Ausgestaltung werden Pulvermaterial und Feinkornmaterial im Wesentlichen durch SiC gebildet. In diesem Fall sind Kleber auf der Basis von siliziumorganischen Polymeren bevorzugt.

Im Falle von metallischem Pulvermaterial wird das Feinkornmaterial bevorzugt aus Metallen oder Legierungen der Elemente Cu, Sn, Zn, Al, Bi, Fe oder Pb gebildet.

Für metallisches Pulvermaterial sind als Feinkornmaterial ebenso auch Metallsalze geeignet, die sich thermisch zu den entsprechenden Metallen zersetzen lassen.

Die Herstellung der Beschichtung kann nach den üblichen Beschichtungsverfahren für Pulverpartikel erfolgen. Bevorzugt wird die Beschichtung in einem Wirbelschichtreaktor oder einem Sprühtrockner aufgebracht.

Im Wirbelschichtreaktor erfolgt die Zufuhr des Klebemittels durch Einsprühen oder Verdüsen einer Lösung in einem geeigneten Lösungsmittel. Die Zufuhr des Feinkornmaterials erfolgt beispielsweise über das Einsprühen oder Verdüsen von geeigneten Suspensionen oder kolloidalen Lösungen. Ebenso kann das Feinkornmaterial aber auch als Feststoff in gleicher Weise wie das Pulvermaterial zudosiert werden.

Je nach Verweilzeit des Pulvermaterials in der Beschichtungsvorrichtung können die Pulverpartikel einzeln beschichtet werden, oder mittels Kleber als Binderphase zu Granulaten aufgebaut werden. Die Schichtdicke des aufgetragenen Klebers lässt sich beispielsweise über die Konzentration des Klebers in der eingesprühten Lösung, die Verweilzeit und die Temperatur im Reaktor, beziehungsweise Sprühtrockner einstellen.

In alternativer Weise kann das Feinkornmaterial auch erst auf die mit Klebemittel beschichteten Pulverpartikel aufgetragen werden. Dies geschieht dann bevorzugt durch mechanisches Mischen, beispielsweise in einem Hybridizer. Das härtere Feinkornmaterial wird dabei in die weichere Beschichtung durch einen Mischvorgang mechanisch eingearbeitet.

Durch diese Verfahren können sowohl beschichtete Primärpartikel als auch beschichtete Granulate erzeugt werden. Insbesondere ist es auch möglich, mit Kleber gebundene Granulate aus Partikeln des Pulvermaterials und des Feinkornmaterials zu erhalten.

Ein weiterer Aspekt der Erfindung betrifft ein Verfahren zur Herstellung eines Körpers aus dem erfindungsgemäß beschichteten Pulvermaterial. Das Pulvermaterial wird hierbei zunächst als dünne Pulverschicht ausgebracht. Hierbei können insbesondere die bei der 3D-Binderdrucktechnik üblichen Verfahren angewendet werden. Durch die geringe Wasseraufnahme der erfindungsgemäß beschichteten Pulver treten bei diesem Verfahrensschritt deutliche Vorteile hinsichtlich Gleichmäßigkeit der Pulverschicht und beim Pulverhandling auf. Bevorzugt ist die Pulverschicht nur wenige Pulverlagen dick, und besonders bevorzugt besteht sie nur aus einer Pulver-Monolage. Die bevorzugte Schichtdicke liegt im Bereich von 10 bis 50µm.

Im 3D-Binderdruckverfahren wird die Pulverschicht darauf in definierten Bereichen mit einer Binderflüssigkeit benetzt, die den Kleber der Beschichtung aktiviert. Bevorzugt werden als Binderflüssigkeitsdüsen hochauflösende Tintenstrahldruckköpfe für Tintenstrahldrucker verwendet.

Die erfindungsgemäße Binderflüssigkeit wird im Wesentlichen durch organische Lösungsmittel oder deren Mischungen gebildet. Dabei handelt es sich bevorzugt um polare Lösungsmittel, wobei deren Mischungen bevorzugt einen Wassergehalt unterhalb 45 Gew% und besonders bevorzugt unterhalb 5 Gew% aufweisen. Die chemische Zusammensetzung der Binderflüssigkeit ist so gewählt, dass die polymeren Produkte der Beschichtung in ihr löslich oder zumindest quellfähig sind. Zu den bevorzugten Lösungsmitteln gehören C2- bis C7-Alkohole, insbesondere Ethylalkohol, (iso)Propanol oder n-Butanol, C3- bis C8-Ketone, wie beispielsweise Aceton oder Ethyl-Methyl-Keton, cyclische Ether, wie Tetrahydrofuran, oder Polyether, wie Dimethoxyethanol oder Dimethoxydiethylenglykol.

Im Falle der Verwendung von wachsartigen Klebern sind niedermolekulare aliphatische Kohlenwasserstoffe, insbesondere cyclische oder lineare C6 bis C8 Aliphaten bevorzugt.

Bevorzugt ist die Binderflüssigkeit nahezu frei von festen oder unlöslichen Bestandteilen. Die Obergrenze liegt bevorzugt bei 5 Gew% liegt. Der geringe Gehalt bzw. das vollständige Fehlen von Feststoffen in der Binderflüssigkeit zeigt für die Zuverlässigkeit und Haltbarkeit der Bindemitteldüsen deutliche Vorteile. Abrasion und Verstopfung der Druckköpfe treten-mit den erfindungsgemäßen Binderflüssigkeiten im Prinzip nicht mehr auf.

Durch die Benetzung der beschichteten Partikel wird der Kleber zumindest im Randbereich der Beschichtung angelöst oder zu Quellung gebracht. In beiden Fällen bildet sich eine klebfähige Phase aus die an der Kontaktfläche benachbarter Partikel eine Verklebung bewirkt.

Erfindungsgemäß ist die Menge an Binderflüssigkeit so gewählt, dass sie für die Auflösung des gesamten in der Beschichtung gebundenen Klebers nicht ausreicht. Vielmehr ist die Menge der Binderflüssigkeit so dosiert, dass sie nur zum Auf- oder Anlösen an den Berührungspunkten benachbarter Partikel ausreicht. Die Anreicherung der Binderflüssigkeiten an diesen Kontaktzonen wird durch Kapillarwirkungen unterstützt. Bevorzugt liegt die zur Befeuchtung des Pulvers verwendete Menge an Binderflüssigkeit im Bereich von 5 bis 70 Vol% des zu beschichtenden Pulvervolumens. Besonders bevorzugt liegt die Menge an Binderflüssigkeit beim 5 bis 25-fachen Volumen des in der Beschichtung vorhandenen Klebers.

Durch die darauffolgende Verdunstung kann der Kleber seine Wirkung entfalten. Dabei erweist sich die Verwendung der organischen Lösungsmittel gegenüber wässrigen Binderflüssigkeiten als weiterer Vorteil. Aufgrund des höheren Dampfdruckes der organischen Lösungsmittel trocknen die befeuchteten Stellen wesentlich schneller aus. Dies wirkt sich positiv auf die Abbildeschärfe und die Prozessgeschwindigkeit aus.

Die Prozessschritte Aufbringen des Pulvermaterials und Befeuchtung werden in bekannter Weise zum Aufbau eines 3D-Körpers wiederholt. Aufgrund der minimalen Quell- und Schwindungsvorgänge können auch vergleichsweise große Körper nahezu spannungsfrei hergestellt werden. Durch das erfindungsgemäße Pulvermaterial und den erfindungsgemäßen Prozess lässt sich die Materialschwindung unter 2 % senken.

Beim Laserinduzierten Sintern findet die Aktivierung des Klebemittels durch Sintern oder Aufschmelzen mittels Laserbestrahlung statt. Dabei wird die eingetragene Energie so dosiert, dass sie nicht zum Aufschmelzen oder Sintern der Primärpartikel ausreicht. Das als Klebemittel eingesetzte Polymer weist dabei bevorzugt eine Schmelz- oder Sintertemperatur im Bereich von 50 bis 250°C auf.

Ein weiterer Aspekt der Erfindung betrifft die Herstellung von Sinterkörpern möglichst geringer Sinterschwindung. Dabei wird von den über das dargestellte 3D-Binderdruckverfahren unter Verwendung der erfindungsgemäßen beschichteten Pulverpartikel erhältlichen Grünkörpern ausgegangen.

Erfindungsgemäß werden die Grünkörper bei einer Temperatur unterhalb der Sinter- oder Glastemperatur des Pulvermaterials und oberhalb derjenigen des in der Beschichtung enthaltenen Feinkornmaterials gebrannt. Unter der Sintertemperatur ist hier die Temperatur des mittleren Sinterstadiums zu verstehen, bei der die Ausbildung eines zusammenhängenden Porenraums erfolgt, die Erkennbarkeit der einzelnen Teilchen verloren geht und die Sinterschwindung beginnt. Bevorzugt liegt die Brenntemperatur der Grünkörper mindestens 30°C unterhalb der Sinter- oder Glasbildungstemperatur des Pulvermaterials. Hierdurch beschränkt sich die durch Sinterung und/oder Glasbildung hervorgerufene Schwindung im Wesentlichen auf das Feinkornmaterial. Die hierdurch hervorgerufenen Volumeneffekte sind minimal, gegenüber dem Gesamtvolumen des Grün- oder Sinterkörpers. Daher können feste Sinterkörper erzeugt werden, die gegenüber den im 3D-Binderdruckverfahren vorgegebenen Abmessungen eine lineare Schwindung von maximal 2 % aufweisen.

Die hierdurch erhältlichen Kunststoff-, Keramik- oder Metallkörper weisen gegenüber dichtgesinterten Materialien eine hohe Porosität auf. Die Porosität liegt dabei typischerweise im Bereich von 40 bis 60 Von%.

Je nach Verwendungszweck können die Sinterkörper nachverdichtet oder nachgesintert werden, um die Porosität zu senken.

Eine erfindungsgemäß bevorzugte Anwendung der mittels Keramik-Pulvermaterial gewonnenen Grünkörper oder Sinterkörper liegt in der Gießereitechnik und dem Formenbau. So eignen sich beispielsweise durch SiO₂-Feinkornmaterial gebundene Al₂O₃- oder ZrSiO₄-Keramik als Formen oder Einlegeteile beim Feinguss von Metallen.

Die erfindungsgemäßen metallischen Körper eignen sich, insbesondere aufgrund ihrer hohen Porosität und guten thermischen Leitfähigkeit, beispielsweise für Anwendungen in Wärmetauschern, oder Katalysatoren. Durch Nachsintern oder geeignete Nachverdichtung können Kleinst- und Mikrobauteile für unterschiedlichste feinmechanische Anwendungen gefertigt werden.

Die erfindungsgemäßen Kunststoff-Körper eignen sich insbesondere als Musterformen.

Außerdem sind sie zur Verwendung im Werkzeugbau geeignet.

## Patentansprüche

1. Beschichtetes Pulvermaterial geeignet für generative rapid prototyping Verfahren,
wobei das Pulvermaterial aus Einzelpartikeln oder Granulaten aus Kunststoff, Metall und/oder Keramik besteht, die jeweils beschichtet sind,
und wobei die Beschichtung ein aktivierbares Klebemittel enthält,
**dadurch gekennzeichnet,**
**dass** die Beschichtung zusätzlich
sinterfähiges und/oder glasbildendes Feinkornmaterial enthält, wobei die mittlere Partikelgröße des Feinkornmaterials unterhalb von 30% der mittleren Partikelgröße des Pulvermaterials liegt.

2. Beschichtetes Pulvermaterial nach Anspruch 1
**dadurch gekennzeichnet,**
**dass** die Sintertemperatur und/oder Glastemperatur des Feinkornmaterials unterhalb der Sintertemperatur oder Glastemperatur des Pulvermaterials liegt.

3. Beschichtetes Pulvermaterial nach Anspruch 1
**dadurch gekennzeichnet,**
**dass** das Feinkornmaterial mindestens ein Oxid, Carbid oder Nitrid der Elemente Si, B, Ti oder Al umfasst.

4. Beschichtetes Pulvermaterial nach Anspruch 3,
**dadurch gekennzeichnet,**
**dass** das Feinkornmaterial Silikate, Borsilikate oder Alumosilikate enthält.

5. Beschichtetes Pulvermaterial nach Anspruch 1
**dadurch gekennzeichnet,**
**dass** das Feinkornmaterial mindestens ein Metall oder ein Metallsalz umfasst.

6. Beschichtetes Pulvermaterial nach Anspruch 1
**dadurch gekennzeichnet,**
**dass** das Feinkornmaterial durch Nanopartikel und/oder Mikropartikel mit einer mittleren Korngröße unterhalb 5 µm gebildet wird.

7. Beschichtetes Pulvermaterial nach Anspruch 1
**dadurch gekennzeichnet,**
**dass** die Sintertemperatur und/oder Glastemperatur des Feinkornmaterials um mindestens 30°C unterhalb der Sintertemperatur und/oder Glastemperatur des Pulvermaterials liegt.

8. Beschichtetes Pulvermaterial nach einem der vorangegangenen Ansprüche
**dadurch gekennzesichhnet,**
**dass** das Klebemittel aus einem in einer Binderflüssigkeit löslichen Kleber besteht.

9. Beschichtetes Pulvermaterial nach Anspruch 8
**dadurch gekennzeichnet,**
**dass** der Kleber aus organischen und/oder metallorganischen Polymeren geringer Wasserlöslichkeit aufgebaut ist.

10. Beschichtete Pulvermaterial nach Anspruch 9
**dadurch gekennzeichnet,**
**dass** der Kleber in einer Binderflüssigkeit aus organischen Lösungsmitteln mit einem Wassergehalt unter 45 % quellbar oder löslich ist.

11. Beschichtetes Pulvermaterial nach einem der. Ansprüche 1 bis 7
**dadurch gekennzeichnet,**
**dass** das Klebemittel aus einem Polymer besteht, das eine Schmelz- oder Sintertemperatur im Bereich von 50 bis 250°C aufweist.

12. Beschichtetes Pulvermaterial nach einem der Ansprüche 1 bis 7
**dadurch gekennzeichnet,**
**dass** das Klebemittel aus einem lichthärtenden Bindemittel besteht.

13. Generatives rapid prototyping Verfahren zum Herstellen eines Körpers aus einem Pulvermaterial umfassend die Schritte
- Ausbringen einer Schicht des Pulvermaterials auf einer Unterlage,
- Befeuchten definierter Bereiche der Schicht mit einer Binderflüssigkeit zur Aktivierung eines Binders,
- wobei die Binderflüssigkeit aus organischen Lösungsmitteln ausgewählt ist und einen Wassergehalt unterhalb 45 % aufweist,
wobei Pulvermaterial nach einem der Ansprüche 8 bis 10 verwendet wird.

14. Verfahren nach Anspruch 13,
**dadurch gekennzeichnet,**
**dass** der Anteil unlöslicher Bestandteile in der Binderflüssigkeit unterhalb 5 Gew% liegt.

15. Verfahren nach Anspruch 13,
**dadurch gekennzeichnet,**
**dass** die zur Befeuchtung des pulvers verwendete Menge an Binderflüssigkeit im Bereich von 5 bis 70 Vol% des zu beschichtenden Pulvervolumens liegt.

16. Generatives rapid prototyping Verfahren zum Herstellen eines Körpers aus einem mit einem Klebemittel beschichteten Pulvermaterial umfassend die Schritte
- Ausbringen einer Schicht des Pulvermaterials auf einer Unterlage,
- Bestrahlung definierter Bereiche der Schicht mit Laserlicht,
- Aufschmelzen oder Versintern des Klebemittels durch die Laserbestrahlung,
- wobei die Energie des Laserlichtes nicht zum Aufschmelzen oder Sintern des Pulvermaterials ausreicht,
- wobei Pulvermaterial nach Anspruch 11 verwendet wird.

17. Verfahren zur Herstellung eines Sinterkörpers aus einem Pulvermaterial nach einem rapid prototyping Verfahren,
**dadurch gekennzeichnet,**
**dass** ein rapid prototyping Verfahren gemäß den Ansprüchen 13 bis 16 durchgerührt wird,
**dass** die Temperatur zur Sinterung eines über das rapid prototyping Verfahren hergestellten Grünkörpers unterhalb der Sinter- oder Glastemperatur des Pulvermaterials und oberhalb derjenigen des in der Beschichtung enthaltenen Feinkornmaterials liegt.

18. Verwendung eines Sinterkörpers in der Gießereitechnik oder im Formenbau,
**dadurch gekennzeichnet,**
**dass** der Sinterkörper mit einem Verfahren zur Herstellung eines Sinterkörpers nach Anspruch 17 hergestellt wurde.

19. Verwendung eines Sinterkorpers in der Feinmechanik oder im Werkzeugbau,
**dadurch gekennzeichnet,**
**dass** der Sinterkörper mit einem Verfahren zur Herstellung eines Sinterkörpers nach Anspruch 17 hergestellt wurde.

## Claims

1. Coated powder material
suitable for rapid generative prototyping methods,
wherein the powder material consists of single particles and/or granulates of plastics, metal and/or ceramics, which are respectively coated,
and wherein the coating contains an activatable adhesive,
**characterized in that**
the coating additionally contains fine-grained material which can be sintered and/or form glass, wherein the average particle size of the fine-grained material is below 30% of the average particle size of the powder material.

2. Coated powder material according to claim 1,
**characterized in that**
the sinter temperature and/or glass temperature of the fine-grained material is below the sinter temperature or glass temperature of the powder material.

3. Coated powder material according to claim 1,
**characterized in that**
the fine-grained material comprises at least an oxide, carbide or nitride of the elements Si, B, Ti or Al.

4. Coated powder material according to claim 3,
**characterized in that**
the fine-grained material contains silicates, borosilicates or aluminosilicates.

5. Coated powder material according to claim 1,
**characterized in that**
the fine-grained material comprises at least one metal or a metallic salt.

6. Coated powder material according to claim 1,
**characterized in that**
the fine-grained material is formed by nano particles and/or micro particles with an average grain size below 5 µm.

7. Coated powder material according to claim 1,
**characterized in that**
the sinter temperature and/or the glass temperature of the fine-grained material is at least 30°C below the sinter temperature and/or glass temperature of the powder material.

8. Coated powder material according to one of the preceding claims, **characterized in that**
the adhesive consists of an adhesive soluble in a binder fluid.

9. Coated powder material according to claim 8,
**characterized in that**
the adhesive is made of organic and/or organometallic polymers with a low water solubility.

10. Coated powder material according to claim 9,
**characterized in that**
the adhesive is swellable or soluble in a binder fluid of organic solvents with a water content below 45%.

11. Coated powder material according to one of claims 1 to 7,
**characterized in that**
the adhesive consists of a polymer, which comprises a melting or sinter temperature in the region of 50 to 250°C.

12. Coated powder material according to one of claims 1 to 7,
**characterized in that**
the adhesive consists of a light-hardening binder.

13. Rapid generative prototyping method for producing a body of a powder material comprising the following steps
- applying a layer of the powder material to a base,
- humidifying defined regions of the layer with a binder fluid for activating a binder,
- wherein the binder fluid is selected from organic solvents and comprises a water content below 45%,
wherein powder material according to one of claims 8 to 10 is used.

14. Method according to claim 13,
**characterized in that**
the part of insoluble components in the binder fluid is below 5 weight%.

15. Method according to claim 13,
**characterized in that**
the amount of binder fluid used for humidifying the powder is in the region of 5 to 70 vol% of the powder volume to be coated.

16. Rapid generative prototyping method for producing a body of a powder material coated with an adhesive, comprising the following steps
- applying a layer of the powder material to a base,
- irradiating defined regions of the layer with laser light,
- melting on or sintering the adhesive by the laser irradiation,
- wherein the energy of the laser light is not sufficient for melting on or sintering the powder material,
- wherein powder material according to claim 11 is used.

17. Method for producing a sintered body of a powder material according to a rapid prototyping method,
**characterized in that**
a rapid prototyping method according to claims 13 to 16 is carried out,
that the temperature for sintering a green body produced by the rapid prototyping method is below the sinter or glass temperature of the powder material and above the one of the fine-grained material contained in the coating.

18. Use of sintered body according to claim 17 in the casting technology or moulding,
**characterized in that**
the sintered body was produced with a method for producing a sintered body according to claim 17.

19. Use of a sintered body according to claim 17 in precision engineering or tool manufacture,
**characterized in that**
the sintered body was produced with a method for producing a sintered body according to claim 17.

## Revendications

1. Matière poudreuse à particules revêtues utilisée dans des procédés de conception rapide, ladite matière poudreuse se compose de particules ou de granules individuels en plastique, en métal et / ou en céramique, qui sont à chaque fois revêtus, et le revêtement contenant un agent adhésif peut être activé, **caractérisée en ce que** le revêtement contient un matériau à grain fin apte au frittage et / ou à la formation de verre, la dimension moyenne des particules du matériau à grain est inférieure de 30 % à la dimension moyenne des particules de la matière poudreuse.

2. Matière poudreuse revêtue selon la revendication 1, **caractérisée en ce que** la température de frittage et / ou la température du verre du matériau à grain fin est inférieure à la température de frittage ou la température du verre de la matière poudreuse.

3. Matière poudreuse revêtue selon la revendication 1, **caractérisée en ce que** le matériau à grain fin comprend au moins un oxyde, un carbure ou un nitrure des éléments Si, B, Ti ou Al.

4. Matière poudreuse revêtue selon la revendication 3, **caractérisée en ce que** le matériau en grain fin contient du silicate, du borosilicate ou du silicate d'aluminium.

5. Matière poudreuse revêtue selon la revendication 1, **caractérisée en ce que** le matériau à grain fin comprend au moins un métal ou un sel métallique.

6. Matière poudreuse revêtue selon la revendication 1, **caractérisée en ce que** le matériau à grain fin est formé par des nanoparticules et / ou des microparticules dont la dimension moyenne du grain est inférieure à 5 µm.

7. Matière poudreuse revêtue selon la revendication 1, **caractérisée en ce que** la température de frittage et / ou la température du verre du matériau à grain fin est au moins inférieure de 30°C à la température de frittage et / ou de la température du verre de la matière poudreuse.

8. Matière poudreuse revêtue selon l'une quelconque des revendications précédentes,
**caractérisée en ce que** l'agent adhésif est composé d'une colle soluble dans un liquide liant.

9. Matière poudreuse revêtue selon la revendication 8, **caractérisée en ce que** la colle est constituée de polymères organiques et / ou organométalliques de faible solubilité dans l'eau.

10. Matière poudreuse revêtue selon la revendication 9, **caractérisé en ce que** la colle peut être trempée ou soluble dans un liquide liant composé de solvants organiques avec une teneur en eau inférieure à 45 %.

11. Matière poudreuse revêtue selon l'une quelconque des revendications 1 à 7,
**caractérisée en ce que** l'agent adhésif est constitué d'un polymère qui présente une température de fusion ou de frittage entre 50 et 250 °C.

12. Matière poudreuse revêtue selon l'une quelconque des revendications 1 à 7,
**caractérisée en ce que** l'agent adhésif est constitué d'un agent liant durcissant à la lumière.

13. Procédé génératif de conception rapide destiné à la fabrication d'un corps à partir d'une matière poudreuse, comprenant les étapes :
- répandre une couche de la matière poudreuse sur un support,
- humidifier des zones définies de la couche avec un liquide liant destiné à activer un liant,
- le liquide liant étant sélectionné parmi des solvants organiques et présentant une teneur en eau inférieure à 45 %,
la matière poudreuse étant utilisée selon l'une quelconque des revendications 8 à 10.

14. Procédé selon la revendication 13, **caractérisé en ce que** la proportion des composants insolubles dans le liquide liant est inférieure à 5 % en poids.

15. Procédé selon la revendication 13, **caractérisé en ce que** la quantité de liquide liant utilisée pour humidifier la poudre se trouve dans une plage entre 5 et 70 % en volume de la poudre à revêtir.

16. Procédé génératif de conception rapide destiné à fabriquer un corps à partir d'une matière poudreuse revêtue d'un agent liant comprenant les étapes
- répandre une couche de la matière poudreuse sur un support,
- irradier les zones définies de la couche avec une lumière laser.
- faire fondre ou fritter l'agent adhésif par irradiation par laser,
- l'énergie de la lumière laser n'étant pas suffisante pour faire fondre ou fritter la matière poudreuse,
- la matière poudreuse étant utilisé selon la revendication 11.

17. Procédé de fabrication d'un corps fritté à partir d'une matière poudreuse selon un procédé de conception rapide, **caractérisé en ce que** un procédé de conception rapide est réalisé selon les revendications 13 à 16, **en ce que** la température pour le frittage d'un corps cru fabriqué selon le procédé de conception rapide est inférieure à la température de frittage ou du verre de la matière poudreuse et supérieure à celle du matériau à grain fin contenu dans le revêtement.

18. Utilisation d'un corps fritté dans la technique de fonderie ou dans la construction de moules **caractérisée en ce que** le corps fritté a été fabriqué selon un procédé de fabrication d'un corps fritté selon la revendication 17.

19. Utilisation d'un corps fritté dans la mécanique de précision ou dans la fabrication d'outils, **caractérisée en ce que** le corps fritté a été fabriqué selon un procédé de fabrication d'un corps fritté selon la revendication 17.
